(19) Europäisches Patentamt / European Patent Office / Office européen des brevets

(11) **EP 4 646 315 B1**

(12) **EUROPEAN PATENT SPECIFICATION**

(45) Date of publication and mention
of the grant of the patent:
**29.07.2026   Bulletin 2026/31**

(21) Application number: **23702223.1**

(22) Date of filing: **02.01.2023**

(51) International Patent Classification (IPC):
**B25J 9/16** (2006.01)

(52) Cooperative Patent Classification (CPC):
**B25J 9/1692;** G05B 2219/39024;
G05B 2219/39045; G05B 2219/39057

(86) International application number:
**PCT/EP2023/050029**

(87) International publication number:
**WO 2024/146686 (11.07.2024 Gazette 2024/28)**

(54) **ROBOT SYSTEM AND CALIBRATION METHOD**

ROBOTERSYSTEM UND KALIBRIERUNGSVERFAHREN

SYSTÈME DE ROBOT ET PROCÉDÉ D'ÉTALONNAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**12.11.2025   Bulletin 2025/46**

(73) Proprietor: **ABB Schweiz AG**
**5400 Baden (CH)**

(72) Inventors:
• **BERNINGER, Tobias**
**82299 Türkenfeld (DE)**
• **ROBERTS, Richard**
**82205 Gilching (DE)**

(74) Representative: **Maiwald GmbH**
**Engineering**
**Elisenhof**
**Elisenstrasse 3**
**80335 München (DE)**

(56) References cited:
**US-A1- 2008 188 986     US-A1- 2020 189 112
US-A1- 2022 414 932**

• **SOOYONG LEE: "Mobile robot localization using
optical mice", ROBOTICS, AUTOMATION AND
MECHATRONICS, 2004 IEEE CONFERENCE ON
SINGAPORE 1-3 DEC. 2004, PISCATAWAY, NJ,
USA,IEEE, US, vol. 2, 1 December 2004
(2004-12-01), pages 1192 - 1197, XP010805938,
ISBN: 978-0-7803-8645-7**

**Description**

The present invention relates to a robot system comprising an articulated robot and its controller, and to a method for calibrating an articulated robot.

Robot calibration is a common problem in robotics where kinematic parameters used for trajectory planning do not match with the true kinematics of the robot, i.e. in which manufacturing tolerances, elasticity under load and other external influences cause dimensions of robot links - or rather, to be exact, distances between joint axes at opposite ends of the links - to differ from specified values, or where imperfections of a reduction gear used in a joint causes the rotation speed of the joint to fluctuate around a target value output by the controller, so that the true position of a reference point of the robot in space deviates from a position that would be expected based on rated dimensions of the robot's links and target angles that have been set for the robot's joints by a controller. Most common calibration methods are based on measurements of the actual end effector position of the robot using a laser tracker, laser interferometry, camera systems, string pull devices, or any other kind of distance sensors, and involve an optimization of the kinematic parameters of the robot based on the results of these measurements.

Residual inaccuracies that remain after calibration can be compensated using a camera that moves along with the robot and provides an image of a target the robot shall reach. Based on the position of the target in the image, the position of the robot can be controlled in a closed loop. The faster the robot is moving, the higher must be the frame rate of the camera.

EP 3 730 256 A1 proposes to overcome this problem by using an event-based light sensor attached to a robot for detecting an optical flow. The event-based light sensor must be operative whenever the robot is moving, and evaluating its data requires substantial computing power. US 2020/0189112 A1 describes a calibration apparatus of a robot that includes an arm, a joint attached to the arm, a motor provided to the joint, and a gear speed reducer provided between the motor and the joint. The calibration apparatus comprises setting circuitry that sets a destination position of an end of the arm in a predetermined three-dimensional space, acquiring circuitry that acquires an angle of the joint when the end of the arm is moved to the destination position, adjusting circuitry that adjusts the angle acquired by the acquiring circuitry in accordance with a rotational angle transmission error in gears of the gear speed reducer, and correcting circuitry that corrects a Denavit-Hartenberg parameter of the robot by using the angle adjusted by adjusting circuitry. US 2022/0414932 A1 describes calibrating image data using camera and inertial sensor information. Sooy-ong Lee *et. al* describes a mobile robot localization using optical mice.

It would therefore be desirable to provide a robot system and a calibrating method for it that would allow a movement of the robot to be controlled with high precision in an open loop.

To this end, the present invention provides a robot system comprising an articulated robot, a controller and an optical flow sensor,

the articulated robot comprising a plurality of links connected to one another by rotary joints,
the optical flow sensor comprising an optical sensor portion arranged to sense displacement of one of the links and an evaluation portion for deriving velocity information from image data output by the sensor portion,
the controller being adapted

- to calculate an expected position of a reference point on one of said links based on target rotation angles associated to the joints and on a vector of intrinsic parameters of the robot,
- to control movement of said reference point along a predetermined path so that the expected position varies with a predetermined velocity,
- to compare a velocity measured by said optical flow sensor during said movement to said predetermined velocity, and
- to minimize a deviation between the measured and predetermined velocities by varying the vector of intrinsic parameters.

While conventional camera-based calibration methods require that relative positions of a reference point of the robot, a reference point of the working environment and of the camera be known with high precision for a reference pose of the robot, and inaccuracies in the measurement of each can affect the quality of calibration, there is no such requirement for the robot system of the present invention, so that a precise calibration can be achieved without much preparatory work.

The optical sensor portion could be stationary and be arranged to sense a displacement of the reference point by having the latter move through its detection range. Preferably, however, the optical sensor portion is arranged to sense displacement of the reference point by being mounted on a same link with said reference point and sensing a stationary surface, since then a single optical sensor portion can be sufficient for carrying out a calibration spanning the entire displacement range of the link, even if the detection range of the optical sensor portion is smaller than the displacement range.

Different types of optical flow sensor can be used for the invention. In a basic embodiment, an optical flow sensor of the type used in computer mice could be employed, and the movement of the sensor portion of the optical flow sensor might be in sliding contact with a surface of the robot's working environment. In a preferred embodiment, the optical flow sensor comprises a camera, and the evaluation portion is adapted to extract an optical flow from image data of the camera, since the camera might also be used for closed loop control of the robot, for example when the reference point must be positioned with respect to a workpiece whose position is variable.

Extracting the optical flow from image data is facilitated when the movement of the reference point is parallel to a surface that is being observed by the camera during said movement.

The surface observed can be any flat surface in the working environment of the robot, such as a floor or a wall of a room containing the robot, or a tabletop supporting the robot. Preferably the robot is mounted on said surface, since thus the orientation of the surface in a coordinate system in which a base of the robot is stationary is known, and the predetermined path can easily be controlled to be parallel to the surface.

In a coordinate system in which the sensor portion is stationary, the reference point should preferably be stationary, too. This can be achieved by attaching both to a same link, typically a distalmost link, of the robot.

Irregularities of the optical flow are the easier to detect, the more regular the predetermined path is. Preferably, therefore, the predetermined comprises at least one of a straight line, a circle or a circular arc. In order to allow calibration of various degrees of freedom of the robot, more than one of the above-defined paths can be combined, thus forming a composite path comprising e.g. a pair lines that meet under a predetermined angle, or several pairs forming a rectangle or a polygon.

At least one of the intrinsic parameters to be optimized in the calibration should relate to the length of one of said links (or, to be precise, the distance between axes of joints at the proximal and distal ends of said link), to an offset between a target rotation angle and an actual rotation angle of a joint, or to the transmission ratio of a reduction gear associated to one of said joints. Where the intrinsic parameter relates to the transmission ratio, it may define Fourier coefficients and phases of harmonic components of the rotation speed of an output shaft of the reduction gear when the input shaft is driven at a constant rotation speed.

The deviation to be minimized should be a difference amount integrated along said predetermined path, as such a deviation between an expected position or speed and a position or speed deduced from the optical flow will vanish when calibration is perfect.

The invention further provides a method for calibrating an articulated robot comprising a plurality of links connected to one another by rotary joints, the method comprising the steps of:

a) controlling movement of a reference point on one of said links along a predetermined path so that an expected position of the reference point calculated based on target rotation angles associated to the joints and on a vector of intrinsic parameters of the robot varies with a predetermined velocity,
b) simultaneously with step a), measuring the velocity of the reference point using an optical flow sensor,
c) comparing the velocity measured in step b) to said predetermined velocity; and
d) minimizing a deviation between the measured and predetermined velocities by varying the vector of intrinsic parameters.

Step d) may comprise repeating steps a) to c) after having made a variation to the vector of intrinsic parameters, so as to determine the effect of the variation.

The amount and, optionally, the direction of the predetermined velocity can be held constant along at least part of the predetermined path, so that any variation of the amount or direction of the velocity derived from the optical flow can be regarded as a deviation which is to be minimized.

In order to reduce the time needed for the minimization, the method can comprise the steps of:

- simulating at least one data series of velocities expected along said path when the intrinsic parameter vector of the robot differs from a nominal parameter vector by a predetermined deviation vector,
- choosing the variation made in step d) based on a comparison of velocities measured in step b) with said at least one simulated data series. The more closely one of these data series resembles the result of measuring the velocity in step b), the more safely it can be assumed correcting the vector of intrinsic parameters by said predetermined deviation vector will reduce the deviaton between measured and predetermined velocities.

The measurement of velocity in step b) can be facilitated by also taking into account output from an inertial measurement unit (IMU) which is moved jointly with at least the optical sensor portion of the flow sensor. Since many mobile phones come equipped with both a camera and an IMU, using such a mobile phone by e.g. temporarily attaching it to the robot arm can be a very convenient and economic way to carry out the calibration.

A further object of the invention is a computer program product comprising instructions which, when executed by a processor, cause the processor to operate as the controller in the robot system described above or to carry out the above method.

Further features and advantages of the invention will become apparent from the subsequent description of embodiments, referring to the appended drawings.

Fig.1 is a block diagram of a robotic system implementing the invention;

Fig. 2 is a perspective view of the articulated robot arm of the system of Fig. 1; and

Fig. 3 is a cross section of a harmonic drive gear.

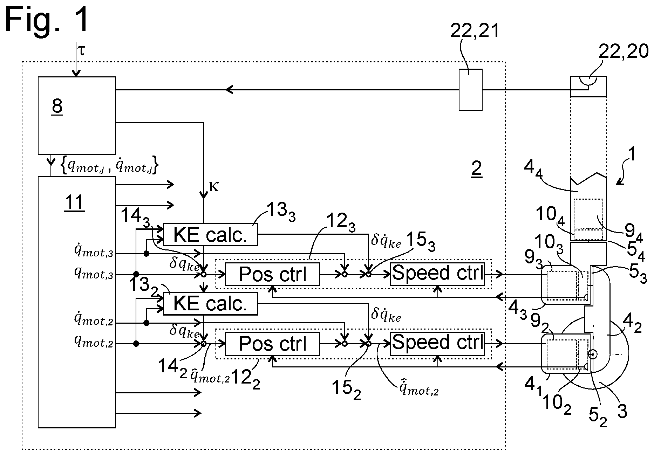

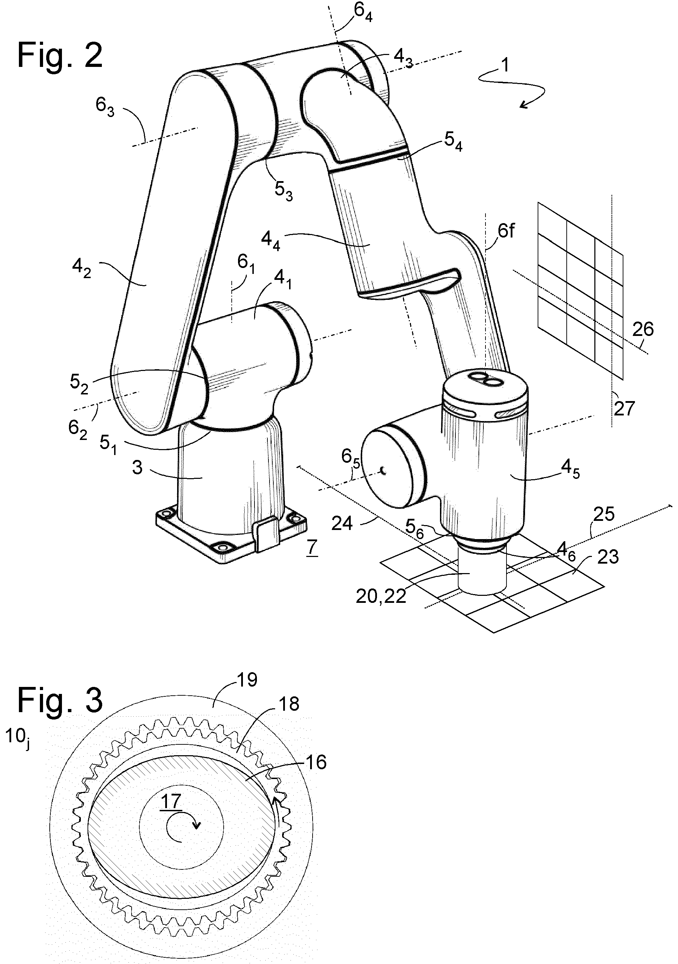

Fig. 1 is a block diagram of a robot system comprising an articulated robot arm 1 and a controller 2. The robot arm 1, shown in more detail in Fig. 2, has a stationary base 3 fixed to a horizontal support 7, such as a tabletop or a workshop floor, and a plurality of links $4_j$, j=1,..., 6 rotatably connected to each other and to the base 3 by joints $5_j$. The joint $5_5$ connecting links $4_4$, $4_5$ is concealed behind link $4_5$. Each joint $5_j$ enables a rotation of the link $4_j$ on its distal side by an axis $6_j$. Axis $6_1$ is vertical, axes $6_2$ and $6_3$ are horizontal; the orientations of the other axes vary. Each joint $5_j$ has a motor associated to it for driving its rotation; the motor can be provided in a member on the proximal side of the joint and be connected to a member on the distal side thereof, or vice versa. In the robot arm of Fig. 2, joints $5_1$, $5_2$, $5_3$ have their motors in members on their proximal side, i.e. in base 3 and links $4_1$, $4_5$, respectively; joints $5_3$, $5_4$ and $5_5$ have the motors on their distal side, in links $4_3$, $4_4$ and $4_5$, respectively.

Motors $9_2$, $9_3$, $9_4$ associated to joints $5_2$, $5_3$, $5_4$ and reduction gears $10_2$, $10_3$, $10_4$ connecting these motors to links $4_2$, $4_2$ and $4_3$, respectively, are shown in Fig. 1. A resolver $8_j$ is placed at each joint $5_j$ so as to measure its rotation angle $q^*_{arm,j}$.

The reduction gear $10_j$ is a harmonic gear, shown in cross section in Fig. 3, in which a wave generator 16 is rigidly coupled to an output shaft 17 of motor $9_j$, and is pressing teeth of a flexspline 18 into local engagement with a circular spline 19 surrounding it. When the number of teeth of the circular spline 19 is $i_c$ and that of the flexspline 18 is $i_f$, ratio of the gear $10_j$ is $R_j = \dfrac{i_f - i_c}{i_f}$. Since the flexspline is 18 rotating in a direction opposite to that of the wave generator 16, points of the two currently in contact will meet again after the wave generator 16 has rotated by $2\pi \, {}^{i_f}\!/_{i_c}$, slightly less than a complete turn.

The link $4_6$ at the distal end of the robot arm 1 carries an optical sensor portion 20 of an optical flow sensor 22. A signal processor 21 for extracting the optical flow from the output of the optical sensor portion 20 can be integrated in the optical sensor portion 20 itself, or in controller 2. As shown here, the optical sensor portion 20 can be attached to a flange of link $4_6$ which, in normal operation of the robot arm 1, would carry an end effector. The optical sensor portion 20 can be of a type commonly used in optical computer mice, designed to detect a displacement of the link $4_6$ while being in sliding contact with the support 7. Alternatively, the end effector can be attached to the flange and hold the optical sensor portion 20.

According to a still further alternative, the optical sensor portion 20 might comprise an electronic camera, outputting a series of frames, and the signal processor for extracting the optical flow from the frames is implemented in controller 2. The camera can be attached to the link $4_6$ as described above, or a dedicated connector for the camera could be provided on the link $4_6$ in addition to the flange, or on link $4_5$, so that in normal operation the camera can be attached to the robot arm 1 concurrently with the end effector, and can be used to monitor operation of the end effector.

In a particular embodiment, the camera is part of a smartphone temporarily attached to the robot arm 1, e.g. being held by the end effector. In that case, the signal processor 21 for extracting the optical flow can be the processor which is conventionally built-into the smartphone and which can be adapted to extract the optical flow by appropriate software loaded into a memory of the smartphone. Since many conventional smartphones come with an IMU, the software can be designed to take into account output from the IMU when extracting the optical flow.

The support 7 can be provided with a grid or pattern 23, in order to facilitate quantitative detection of a displacement of the link $4_6$ by the flow sensor 22.

In order to facilitate quantitative detection of a displacement, it is also helpful for the camera to be held with its optical axis perpendicular to the surface of the support 7 observed by it, so that the size of a feature on that surface will not vary while in images from the camera while the camera is moved parallel to the surface.

Controller 2 comprises a command generator 8 which receives a predetermined trajectory $\tau$, defined by a plurality of points in three-dimensional space and associated instants in time at which a reference point of the link $4_6$ or of the optical sensor portion 20 mounted to it is to reach each of these points. Based on a model of the robot arm 1, the command generator determines a series of rotation angles $q_{mot,j}$ to be assumed by the motors $9_j$ of the joints $5_j$ in order to place the reference point at points of the predetermined trajectory $\tau$ and of motor speeds $\dot{q}_{mot,j}$ needed in order to have the reference point move along the trajectory $\tau$ at a constant speed.

In order to calculate the position of the reference point in three-dimensional space from motor angles $q_{mot,j}$, the relation between each motor angle and the associated joint angle and the length of each link must be known. Ideally, the relation between motor and joint angles would simply be $q_{arm,j} = R_j q_{mot,j}$, imperfections of the reduction gear $10_j$ are taken into account, the relation can be written as

$$q_{arm,j} = R_j q_{mot,j} + \vartheta_0 + \sum_{i=1}^{M} A_{i,j} \sin\left(k_i q_{mot,j} + \vartheta_{i,j}\right),$$

wherein $\vartheta_0$ is an offset between an angle measured by resolver $8_j$ and the actual rotation angle of link $4_j$, $A_{i,j}$ and $\vartheta_{i,j}$ are weighting coefficients and phases of harmonics caused by imperfections such as eccentricities of gearwheels in the reduction gear $10_j$, and $\vartheta_0 + \sum_{i=1}^{M} A_{i,j} \sin\left(k_i q_{mot,j} + \vartheta_{i,j}\right)$ is referred to as the kinematic error correction $\delta q_{ke,j}$ of joint $4_j$. Based on the relation above, the model allows to calculate the position of the reference point as a function not only of the motor angles $q_{mot,j}$, but also of the intrinsic parameters $A_{i,j}, \vartheta_{i,j}, _0$ that are characteristic for this particular robot arm 1.

It should be kept in mind that the above equation is an approximation, the precision of which varies depending on the number of summands $M$ considered. In a simple but practically relevant case, $M$ can be zero, i.e. the equation reduces to

$$q_{arm,j} = R_j q_{mot,j} + \vartheta_0.$$

This case will not be specifically described below, since it can be readily derived from any of the following mathematical expressions by setting $M = 0$, or $A_{i,j}, \vartheta_{i,j} = 0$.

Trajectory generator 11 is adapted to output to joint controllers $12_j$ associated to each joint $5_j$ the series of position and speed commands $q_{mot,j} \dot{q}_{mot,j}$ with an appropriate timing, as would be required for having a reference point follow the predetermined trajectory $\tau$ assuming that the resolver offset $\vartheta_0$ is zero, and that the transmission ratio of each reduction gear $10_j$ is the rated ratio and independent of the orientation of its associated motor output shaft $17_j$ i.e. that all coefficients $\vartheta_0, A_{i,j}$ are zero.

Each joint controller $12_j$ further has associated to it a kinematic error calculator $13_j$ for calculating the kinematic error correction $\delta_{qke,j}$ and its derivative $\delta_{\dot{q}ke,j}$ and adders $14_j, 15_j$ for superimposing the kinematic error correction onto the commands $q_{mot,j}, \dot{q}_{mot,j}$ output by the trajectory generator 11, and providing corrected commands $\hat{q}_{mot,j} = q_{mot,j} + \delta q_{ke,j}$, $\hat{\dot{q}}_{mot,j} = \dot{q}_{mot,j} + \delta \dot{q}_{ke,j}$ as will be explained in detail below.

It can be assumed that prior to calibration of the robot arm 1 by the method of the present invention, the kinematic error calculators $13_j$ apply kinematic error corrections $\delta q_{ke}, \delta \dot{q}_{ke} =$

In a first step of the method, the command generator calculates a series of commands $\{q_{mot,j}, \dot{q}_{mot,j}\}_0$ which would cause the reference point to follow the predetermined trajectory by moving along a predetermined path 24 at a constant speed under the assumption that the intrinsic parameters $A_{i,j}, \vartheta_{i,j}, \vartheta_0$ are all zero, and dimensions of the links equal their respective rated values.

While trajectory generator 11 outputs this series of commands $\{q_{mot,j}, \dot{q}_{mot,j}\}_0$, causing the reference point to move approximately along the path 24, the optical flow sensor 22 records fluctuations of the velocity vector.

In an elementary embodiment, the same series of commands $\{q_{mot,j}, \dot{q}_{mot,j}\}_0$ is output repeatedly, with different vectors of values of the intrinsic parameters being provided to the kinematic error calculators $13_j$, finally retaining the vector that minimized variation of the optical flow. Such an approach can be viable where the number of parameters to be optimized is small, in particular when fluctuations of the transmission ratio are assumed to vanish for all joints, i.e. $\vartheta_0, A_{i,j} =$

In a more systematic embodiment, controller 2 first calculates based on a path integral of these fluctuations a trajectory that was actually followed by the reference point.

When, at a given point in time moving along the trajectory $\tau$, commands are such that the reference point should be located at a point $r$ in space, but the actual position resulting from execution of the commands is $r + \varepsilon$, then it should be possible to place the reference point closer to $r$ by issuing commands that would place it at $r - \varepsilon$, instead. Based on the original predetermined trajectory $\tau$ defining points $r$ and the one actually followed and defining points $r + \varepsilon$, the controller 7 then calculates a corrected trajectory $\tau^*$ formed of points $r - \varepsilon$ and a series of corrected commands associated to the corrected trajectory $\tau^*$. Then it determines a vector of intrinsic parameters $(A_{i,j}, \vartheta_{i,j}, _0)$ so that when the trajectory generator outputs the original series of commands $\{q_{mot,j}, \dot{q}_{mot,j}\}_0$, kinematic error calculators $13_j$ will add such a correction $\delta q_{ke}, \delta \dot{q}_{ke}$ that commands $\hat{q}_{mot,j} = q_{mot,j} + \delta q_{ke}$, $\hat{\dot{q}}_{mot,j} = \dot{q}_{mot,j} + \delta \dot{q}_{ke}$ received by the joint controllers $12_j$ approximate those associated to the corrected trajectory $\tau^*$.

Based on plain and simple guessing or on some more elaborate, conventional optimization algorithm, the controller determines a vector $\kappa$ of values of the intrinsic parameters $\vartheta_0$ and, if appropriate, $A_{i,j}$, $\vartheta_{i,j}$, proved trajectory predicted by the model based on this vector of values is closer to the corrected trajectory $\tau^*$ than the original predetermined trajectory $\tau$ was. Different metrics can be used for quantifying closeness; e.g. an integral, taken along one of the trajectories $\tau^*$, $\tau$, of the scalar distance between points associated to a same instant in time, of the two trajectories, or the maximum of the scalar distance over the two trajectories. This vector of values $\kappa$ is then input to the kinematic error calculators $13_j$, enabling these, while the trajectory generator 11 outputs the same series of commands $\{q_{mot,j}, \dot{q}_{mot,j}\}_0$ as before a second time, to calculate, for each value of $q_{mot,j}$, $\dot{q}_{mot,j}$ output by the trajectory generator, the appropriate kinematic error $\delta q_{ke,j}$, $\delta \dot{q}_{ke,j}$ as a function of $q_{mot,j}$ so that the joint controllers $12_j$ re-ceive corrected commands $\hat{q}_{mot,j} = q_{mot,j} + \delta q_{ke}$,

$$\hat{\dot{q}}_{mot,j} = \dot{q}_{mot,j} + \delta \dot{q}_{ke}$$

. In this way, a vector of intrinsic parameters $\kappa$ reasonably close to the true values can be obtained based on a single displacement of the reference point along the predeterminer trajectory.

If desired, intrinsic parameters still closer to the true values can be obtained by having the command generator calculates new series of commands $\{q_{mot,j}, \dot{q}_{mot,j}\}_\kappa$ based on the vector of intrinsic parameters $\kappa$ obtained previously, i.e. comprising those commands that would be required to have the reference point follow the predetermined trajectory if the intrinsic parameter values used in the model for determining the commands had been $\kappa$, not 0. Using this new series of commands $\{q_{mot,j}, \dot{q}_{mot,j}\}_\kappa$ in place of $\{q_{mot,j}, \dot{q}_{mot,j}\}_0$ the above procedure can be repeated as often as needed to reduce the fluctuations of the velocity vector below a given limit.

The predetermined trajectory $\tau$ can be chosen so that in order to displace the reference point along its path, the robot arm 1 must move in all its degrees of freedom. In that case, the intrinsic parameters can be obtained concurrently for all joints $5_j$ resp. all reduction gears $10_j$ of the robot arm. However, the large number of parameters under consideration tends to make calculations lengthy and to increase the number of iterations needed to bring the fluctuations of the velocity vector below a given limit. In the case shown in Fig.2, path 24 is chosen parallel to support surface 7 and straight in a direction so that it can be followed by moving only joints $5_2$, $5_3$ and $5_5$ (hidden behind link $4_5$), while keeping all others stationary. This greatly reduces the number of intrinsic parameters to be estimated. Paths that require only a subset of the joints to be moved are mostly straight or circular arcs.

Once intrinsic parameters have thus been determined for joints $5_2$, $5_3$ and $5_5$, these can be regarded as known and no longer subject to optimization when intrinsic parameters for the remaining links are determined using a different predetermined path that requires a movement of one or more of the yet unexamined joints and of one or more of joints $5_2$, $5_3$ and $5_5$. For example, a second predetermined path might be a path 25, perpendicular to path 24, on horizontal support 7. For the reference point to follow this path, joints $5_1$, $5_6$ must rotate in addition to joints $5_2$, $5_3$ and $5_5$ so that, when following path 25 with intrinsic parameters for joints $5_2$, $5_3$ and $5_5$ being known from having carried out the above method for path 24, parameters for joints $5_1$, $5_6$ are quite straightforward to find in spite of the large number of joints involved in the movement.

As an alternative, paths 26, 27 on a vertical surface, e.g. on a workshop wall next to the robot 1, might be used.

## Reference numerals

| | |
|---|---|
| 1 | robot arm |
| 2 | controller |
| 3 | base |
| 4 | link |
| 5 | joint |
| 6 | axis |
| 7 | support |
| 8 | command generator |
| 9 | motor |
| 10 | harmonic drive gear |
| 11 | trajectory generator |
| 12 | joint controller |
| 13 | kinematic error calculator |
| 14 | adder |
| 15 | adder |
| 16 | wave generator |
| 17 | output shaft |
| 18 | flexspline |
| 19 | circular spline |
| 20 | optical sensor portion |

21    signal processor
22    optical flow sensor
23    grid
24    path
25    path
26    path
27    path

**Claims**

1.  A robot system comprising an articulated robot (1), a controller (2) and an optical flow sensor (20),

    the articulated robot (1) comprising a plurality of links ($4_j$, j=1, 6) connected to one another by rotary joints ($5_j$),
    the optical flow sensor (20) comprising an optical sensor portion (21) arranged to sense displacement of one ($4_6$) of the links ($4_j$) and an evaluation portion (22) for deriving velocity information from image data output by the sensor portion (20),
    the controller (2) being adapted

    - to calculate an expected position of a reference point on one ($4_6$) of said links based on rotation angles associated to the joints ($5_j$) and on a vector ($\kappa$) of intrinsic parameters of the robot,
    - to control movement of said reference point along a predetermined path ($\tau$) so that the expected position varies with a predetermined velocity,
    - to compare a velocity measured by said optical flow sensor (20) during said movement to said predetermined velocity, and
    - to minimize a deviation between the measured and predetermined velocities by varying the vector ($\kappa$) of intrinsic parameters.

2.  The robot system of claim 1, wherein the optical sensor portion (20) is arranged to sense displacement of said one link ($4_6$) by being mounted on said link ($4_6$) and sensing a stationary surface (7).

3.  The robot system of claim 1 or 2, wherein the optical sensor portion (20) is a camera, and the movement of said reference point is parallel to a surface (7) that is being observed by the camera during said movement.

4.  The robot system of claim 3, wherein during said movement an optical axis of the camera is controlled to be perpendicular to said surface.

5.  The robot system of claim 3 or 4, wherein the surface (7) is a floor or a wall of a room containing the robot (1), or a surface on which the robot (1) is mounted, in particular a tabletop supporting the robot (1).

6.  The robot system of any of the preceding claims, wherein in a coordinate system in which the sensor portion (20) is stationary, an end effector of the robot is also stationary, optionally wherein the end effector and the sensor portion (20) are attached to a distalmost one ($4_6$) of said links.

7.  The robot system of any of the preceding claims, wherein the predetermined path ($\tau$) comprises at least one of a straight line, a circle, a circular arc, a pair of lines that meet under a predetermined angle, a rectangle, a polygon.

8.  The robot system of any of the preceding claims, wherein at least one ($\vartheta_0$) of the intrinsic parameters relates to an offset between a target rotation angle and an actual rotation angle of a joint ($5_j$).

9.  A method for calibrating an articulated robot comprising a plurality of links ($4_j$) connected to one another by rotary joints ($5_j$), the method comprising the steps of:

    a) controlling movement of a reference point on one ($4_6$) of said links along a predetermined path ($\tau$) so that an expected position of the reference point calculated based on rotation angles ($q_{mot,j}$) associated to the joints ($5_j$) and on a vector ($\kappa$) of intrinsic parameters of the robot (1) varies with a predetermined velocity,
    b) simultaneously with step a), measuring the velocity of the reference point using an optical flow sensor (22),
    c) comparing the velocity measured in step b) to said predetermined velocity; and
    d) minimizing a deviation between the measured and predetermined velocities by varying the vector of intrinsic parameters.

10. The method of claim 9, wherein step d) comprises repeating steps a) to c) after having made a variation to the vector ($\kappa$) of intrinsic parameters.

11. The method of claim 9 or 10, wherein the amount and, optionally, the direction of the predetermined velocity is constant along at least part of the predetermined path ($\tau$).

12. The method of claim 11, wherein step c) comprises recording fluctuations of the amount and, optionally, of the direction of the velocity measured in step b).

13. The method of any of claims 9 to 12, further comprising the steps of:

- simulating at least one data series of velocities expected along said path when the intrinsic parameter vector of the robot differs from a nominal parameter vector (0) by a predetermined deviation vector ($\kappa$),
- choosing the variation made in step d) based on a comparison of velocities measured in step b) with said at least one simulated data series.

14. The method of any of claims 9 to 13, wherein in step b), measurement of the velocity is further based on IMU data.

15. A computer program product comprising instructions which, when executed by a processor (18), cause the processor (18) to operate as the controller (4) in the robot system of any of claims 1 to 8 or to carry out the method of any of claims 9-12.

**Patentansprüche**

1. Ein Robotersystem umfassend einen Gelenkroboter (1), eine Steuerung (2) und einen optischen Flusssensor (20),

wobei der Gelenkroboter (1) eine Vielzahl von Gliedern ($4_j$, j = 1, 6) umfasst, die durch Drehgelenke ($5_j$) miteinander verbunden sind;
wobei der optische Flusssensor (20) einen optischen Sensorabschnitt (21) umfasst, der dazu eingerichtet ist, eine Verschiebung eines ($4_6$) der Glieder ($4_j$) zu erfassen, und einen Auswerteabschnitt (22) zur Ableitung von Geschwindigkeitsinformationen aus Bilddaten, die durch den Sensorabschnitt (21) ausgegeben werden;
wobei die Steuerung (2) dazu eingerichtet ist,

- eine erwartete Position eines Referenzpunkts auf einem ($4_6$) der genannten Glieder auf Grundlage von den Drehgelenken ($5_j$) zugeordneten Drehwinkeln und eines Vektors ($\kappa$) intrinsischer Parameter des Roboters zu berechnen,
- eine Bewegung des Referenzpunkts entlang eines vorbestimmten Pfads ($\tau$) zu steuern, sodass sich die erwartete Position mit einer vorbestimmten Geschwindigkeit ändert,
- eine durch den optischen Flusssensor (20) während der Bewegung gemessene Geschwindigkeit mit der vorbestimmten Geschwindigkeit zu vergleichen, und
- eine Abweichung zwischen der gemessenen und der vorbestimmten Geschwindigkeit durch Variation des Vektors ($\kappa$) der intrinsischen Parameter zu minimieren.

2. Das Robotersystem nach Anspruch 1, wobei der optische Sensorabschnitt (20) dazu eingerichtet ist, die Verschiebung des einen Glieds ($4_6$) zu erfassen, indem der Glied ($4_6$) an dem Glied ($4_6$) angebracht ist und eine stationäre Oberfläche (7) erfasst.

3. Das Robotersystem nach Anspruch 1 oder 2, wobei der optische Sensorabschnitt (20) eine Kamera ist und die Bewegung des Referenzpunkts parallel zu einer Oberfläche (7) erfolgt, die während der Bewegung von der Kamera beobachtet wird.

4. Das Robotersystem nach Anspruch 3, wobei während der Bewegung eine optische Achse der Kamera so gesteuert wird, dass sie senkrecht zu der Oberfläche verläuft.

5. Das Robotersystem nach Anspruch 3 oder 4, wobei die Oberfläche (7) ein Boden oder eine Wand eines Raums ist, der den Roboter (1) enthält, oder eine Oberfläche ist, auf der der Roboter (1) montiert ist, insbesondere eine Tischplatte, die den Roboter (1) trägt.

6. Das Robotersystem nach einem der vorhergehenden Ansprüche, wobei in einem Koordinatensystem, in dem der Sensorabschnitt (20) stationär ist, ein Endeffektor des Roboters ebenfalls stationär ist, wobei optional der Endeffektor und der Sensorabschnitt (20) an einem am weitesten entfernten Glied ($4_6$) der genannten Glieder angebracht sind.

7. Das Robotersystem nach einem der vorhergehenden Ansprüche, wobei der vorbestimmte Pfad ($\tau$) mindestens eines von einer geraden Linie, einem Kreis, einem Kreisbogen, einem Paar von Linien, die sich unter einem vorbestimmten Winkel schneiden, einem Rechteck und einem Polygon umfasst.

8. Das Robotersystem nach einem der vorhergehenden Ansprüche, wobei mindestens einer ($\vartheta_0$) der intrinsischen Parameter einen Versatz zwischen einem Ziel-Drehwinkel und einem tatsächlichen Drehwinkel eines Drehgelenks ($5_j$) betrifft.

9. Ein Verfahren zum Kalibrieren eines Gelenkroboters, der eine Vielzahl von Gliedern ($4_j$) umfasst, die durch Drehgelenke ($5_j$) miteinander verbunden sind, wobei das Verfahren die Schritte umfasst:

   a) Steuern einer Bewegung eines Referenzpunkts auf einem ($4_6$) der Glieder entlang eines vorbestimmten Pfads ($\tau$), sodass eine erwartete Position des Referenzpunkts, die auf Grundlage von den Drehgelenken ($5_j$) zugeordneten Drehwinkeln ($q_{mot,j}$) und eines Vektors ($\kappa$) intrinsischer Parameter des Roboters (1) berechnet wird, mit einer vorbestimmten Geschwindigkeit variiert,
   b) gleichzeitiges Messen der Geschwindigkeit des Referenzpunkts unter Verwendung eines optischen Flusssensors (22) während des Schritts a),
   c) Vergleichen der in Schritt b) gemessenen Geschwindigkeit mit der vorbestimmten Geschwindigkeit; und
   d) Minimieren einer Abweichung zwischen der gemessenen und der vorbestimmten Geschwindigkeit durch Variation des Vektors der intrinsischen Parameter.

10. Das Verfahren nach Anspruch 9, wobei Schritt d) ein Wiederholen der Schritte a) bis c) umfasst, nachdem eine Variation des Vektors ($\kappa$) der intrinsischen Parameter vorgenommen wurde.

11. Das Verfahren nach Anspruch 9 oder 10, wobei der Betrag und optional die Richtung der vorbestimmten Geschwindigkeit entlang mindestens eines Teils des vorbestimmten Pfads ($\tau$) konstant sind.

12. Das Verfahren nach Anspruch 11, wobei Schritt c) ein Aufzeichnen von Schwankungen des Betrags und optional der Richtung der in Schritt b) gemessenen Geschwindigkeit umfasst.

13. Das Verfahren nach einem der Ansprüche 9 bis 12, ferner umfassend die Schritte:

   - Simulieren mindestens einer Datenreihe von entlang des Pfads erwarteten Geschwindigkeiten, wenn der Vektor der intrinsischen Parameter des Roboters von einem nominalen Parametervektor (0) um einen vorbestimmten Abweichungsvektor ($\kappa$) abweicht,
   - Auswählen der in Schritt d) vorgenommenen Variation auf Grundlage eines Vergleichs der in Schritt b) gemessenen Geschwindigkeiten mit der mindestens einen simulierten Datenreihe.

14. Das Verfahren nach einem der Ansprüche 9 bis 13, wobei in Schritt b) die Messung der Geschwindigkeit ferner auf IMU-Daten basiert.

15. Ein Computerprogrammprodukt umfassend Anweisungen, die, wenn sie durch einen Prozessor (18) ausgeführt werden, bewirken, dass der Prozessor (18) als die Steuerung (4) in dem Robotersystem nach einem der Ansprüche 1 bis 8 arbeitet oder das Verfahren nach einem der Ansprüche 9 bis 12 ausführt.

**Revendications**

1. Système robotique comprenant un robot articulé (1), un contrôleur (2) et un capteur de flux optique (20),

   le robot articulé (1) comprenant une pluralité de liaisons ($4_j$, j=1 à 6) reliées les unes aux autres par des

articulations rotatives ($5_j$),
le capteur de flux optique (20) comprenant une partie capteur optique (21) agencée pour détecter le déplacement d'une ($4_6$) des liaisons ($4_j$) et une partie évaluation (22) destinée à dériver des informations de vitesse à partir de données d'image fournies par la partie capteur (20), le contrôleur (2) étant adapté à

- calculer une position attendue d'un point de référence sur l'une ($4_6$) desdites liaisons sur la base d'angles de rotation associés aux articulations ($5_j$) et d'un vecteur ($\kappa$) de paramètres intrinsèques du robot,
- commander le mouvement dudit point de référence le long d'une trajectoire prédéterminée ($\tau$) de sorte que la position attendue varie avec une vitesse prédéterminée,
- comparer une vitesse mesurée par ledit capteur de flux optique (20) pendant ledit mouvement à ladite vitesse prédéterminée, et
- minimiser un écart entre les vitesses mesurée et prédéterminée en faisant varier le vecteur ($\kappa$) de paramètres intrinsèques.

2. Système robotique selon la revendication 1, dans lequel la partie capteur optique (20) est agencée pour détecter le déplacement de ladite liaison ($4_6$) en étant montée sur ladite liaison ($4_6$) et en détectant une surface fixe (7).

3. Système robotique selon la revendication 1 ou 2, dans lequel la partie capteur optique (20) est une caméra, et le mouvement dudit point de référence est parallèle à une surface (7) qui est observée par la caméra pendant ledit mouvement.

4. Système robotique selon la revendication 3, dans lequel, pendant ledit mouvement, un axe optique de la caméra est commandé de manière à être perpendiculaire à ladite surface.

5. Système robotique selon la revendication 3 ou 4, dans lequel la surface (7) est un sol ou une paroi d'une pièce contenant le robot (1), ou une surface sur laquelle le robot (1) est monté, en particulier un plateau de table supportant le robot (1).

6. Système robotique selon l'une quelconque des revendications précédentes, dans lequel, dans un système de coordonnées dans lequel la partie capteur (20) est fixe, un effecteur terminal du robot est également fixe, facultativement dans lequel l'effecteur terminal et la partie capteur (20) sont fixés à celle ($4_6$) desdites liaisons qui est la plus distale.

7. Système robotique selon l'une quelconque des revendications précédentes, dans lequel la trajectoire prédéterminée ($\tau$) comprend au moins un élément parmi une ligne droite, un cercle, un arc de cercle, une paire de lignes se coupant en formant un angle prédéterminé, un rectangle, un polygone.

8. Système robotique selon l'une quelconque des revendications précédentes, dans lequel au moins l'un ($\upsilon_0$) des paramètres intrinsèques concerne un décalage entre un angle de rotation cible et un angle de rotation réel d'une articulation ($5_j$).

9. Procédé d'étalonnage d'un robot articulé comprenant une pluralité de liaisons ($4_j$) reliées les unes aux autres par des articulations rotatives ($5_j$), le procédé comprenant les étapes suivantes :

a) commande du mouvement d'un point de référence sur l'une ($4_6$) desdites liaisons le long d'une trajectoire prédéterminée ($\tau$) de sorte qu'une position attendue du point de référence, calculée sur la base d'angles de rotation ($q_{mot, j}$) associés aux articulations ($5_j$) et d'un vecteur ($\kappa$) de paramètres intrinsèques du robot (1), varie avec une vitesse prédéterminée,
b) simultanément à l'étape a), mesure de la vitesse du point de référence au moyen d'un capteur de flux optique (22),
c) comparaison de la vitesse mesurée à l'étape b) à ladite vitesse prédéterminée ; et
d) minimisation d'un écart entre les vitesses mesurée et prédéterminée par variation du vecteur de paramètres intrinsèques.

10. Procédé selon la revendication 9, dans lequel l'étape d) comprend la répétition des étapes a) à c) après variation du vecteur ($\kappa$) de paramètres intrinsèques.

11. Procédé selon la revendication 9 ou 10, dans lequel la valeur et, facultativement, la direction de la vitesse prédéterminée sont constantes le long d'au moins une partie de la trajectoire prédéterminée ($\tau$).

12. Procédé selon la revendication 11, dans lequel l'étape c) comprend l'enregistrement des fluctuations de la valeur et, facultativement, de la direction de la vitesse mesurée à l'étape b).

13. Procédé de l'une quelconque des revendications 9 à 12, comprenant en outre les étapes suivantes :

- simulation d'au moins une série de données de vitesses attendues le long de ladite trajectoire lorsque le vecteur de paramètres intrinsèques du robot diffère d'un vecteur de paramètres nominal (0) d'un vecteur d'écart prédéterminé ($\kappa$),
- choix de la variation réalisée à l'étape d) sur la base d'une comparaison de vitesses mesurées à l'étape b) avec ladite au moins une série de données simulée.

14. Procédé selon l'une quelconque des revendications 9 à 13, dans lequel, à l'étape b), la mesure de la vitesse est en outre basée sur des données d'IMU.

15. Produit programme d'ordinateur comprenant des instructions qui, lorsqu'elles sont exécutées par un processeur (18), amènent le processeur (18) à fonctionner comme le contrôleur (4) dans le système robotique selon l'une quelconque des revendications 1 à 8 ou à mettre en œuvre le procédé selon l'une quelconque des revendications 9 à 12.

## Fig. 1

Fig. 2

Fig. 3

**EP 4 646 315 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3730256 A1
- US 20200189112 A1
- US 20220414932 A1